# EUROPÄISCHE PATENTSCHRIFT

(11) **EP 1 068 372 B1**
(45) Veröffentlichungstag und Bekanntmachung des Hinweises auf die Patenterteilung: **06.02.2002**
(21) Anmeldenummer: 99913306.9
(22) Anmeldetag: 26.03.1999
(51) Int. Cl.: C23C 22/00

(54) **VERFAHREN ZUM SCHUTZ EINES METALLISCHEN SUBSTRATS VOR KORROSION**
METHOD FOR PROTECTING A METALLIC SUBSTRATE AGAINST CORROSION
PROCEDE POUR PROTEGER UN SUBSTRAT METALLIQUE DE LA CORROSION

(30) Priorität: 27.03.1998 DE 19813709
(43) Veröffentlichungstag der Anmeldung: 17.01.2001
(73) Patentinhaber: Institut Für Neue Materialien gem. GmbH, 66123 Saarbrücken (DE)
(72) Erfinder: JONSCHKER, Gerhard, D-66583 Spiesen-Elversberg (DE); LANGENFELD, Stefan, D-66787 Wadgassen (DE); SCHMIDT, Helmut, D-66130 Saarbrücken-Güdingen (DE)
(74) Vertreter: Barz, Peter
(86) Internationale Anmeldenummer: EP9902065
(87) Internationale Veröffentlichungsnummer: WO9950477

(56) Entgegenhaltungen:
- WO-A-88/03938
- DATABASE WPI Section Ch, Week 7837 Derwent Publications Ltd., London, GB; Class A26, AN 78-66587A XP002900530 & SU 508 980 A (FISH IND MECH RES), 7. Februar 1978 (1978-02-07)

## Beschreibung

Die vorliegende Erfindung betrifft ein Verfahren zum Schutz eines metallischen Substrats vor Korrosion und insbesondere ein Verfahren, bei dem die Bildung eines möglichen Korrosionsproduktes des Metalls durch eine konkurrierende Umsetzung bzw. Wechselwirkung des Metalls mit einer Spezies, die zu einem Produkt mit negativerer Bildungsenthalpie als das Korrosionsprodukt führt, weitgehend oder vollständig verhindert wird.

Metalle mit einer solchen Stellung in der Spannungsreihe, daß sie mit Wasser reagieren, bedürfen unter Umständen eines Schutzüberzuges, der den Angriff durch Wasser und/oder Sauerstoff verhindert. Dazu gibt es im Stand der Technik die verschiedensten Verfahren. Während im Fall von Aluminium die anodische Oxidation (Eloxalprozeß) ein weitverbreitetes Verfahren ist, ist diese bei Magnesium schwierig, wenn nicht gar unmöglich. Eine andere Möglichkeit, den Angriff auf die Oberfläche des Metalls zu verhindern, besteht darin, die Permeation der die Korrosion verursachenden Spezies durch die gesamte Schichtdicke des Beschichtungsmaterials zu verhindern. Dazu müssen Schichtdicken von 50 µm und mehr eingesetzt werden. Bei einem weiteren bekannten Korrosionsschutzverfahren wird eine poröse Sol-Gel-Schicht auf dem Substrat aufgetragen, die nachträglich mehrfach mit Polymeren, in diesem Fall Siliconen, imprägniert wird und die durch den hohen Anteil an anorganischem Gerüst eine relativ gute Diffusionsbarriere bereitstellt. Nachteil dieses Verfahrens ist jedoch, daß mehrfach imprägniert werden muß. Damit wird ein solches Schutzsystem verfahrenstechnisch aufwendig und sehr teuer, so daß sich das Prinzip am Markt nicht durchgesetzt hat. Bei Eisenmetallen werden in der Regel korrosionsinhibierende Pigmente zugesetzt.

Eine Aufgabe der vorliegenden Erfindung bestand demgemäß darin, ein (vorzugsweise transparentes) Beschichtungssystem zu entwickeln, das einen effektiven Korrosionsschutz für die verschiedensten metallischen Substrate, vorzugsweise in Kombination mit einer sehr hohen Abriebfestigkeit, bereitstellt.

Erfindungsgemäß wurde gefunden. daß diese Aufgabe gelöst werden kann, indem man (Hetero)polysiloxane mit bestimmten Spezies versieht, die mit dem Metall(ion) eine Bindung oder zumindest eine Wechselwirkung eingehen können, bei der die freie Grenzflächenenthalpie ausreichend erniedrigt wird, und man diese Spezies über ein anorganisches Netzwerk fest in der Struktur der Beschichtung einschließt bzw. verankert. Bedingt durch das anorganische Netzwerk verfügen die resultierenden Beschichtungen auch über eine hohe Abriebbeständigkeit, die durch Nanokompositierung noch verstärkt werden kann. Durch die Nanokompositierung wird auch erreicht, daß derartige Schichten transparent bleiben.

Im Unterschied zum Stand der Technik, der eine Phosphatierung oder Chromatierung als Passivierungsschritt bei konventionellen Korrosionsschutzanstrichen erforderlich macht, kann dieser Schritt entfallen, wenn die erfindungsgemäß verwendeten Spezies molekulardispers in die (Hetero)polysiloxan-Struktur eingebaut werden. Durch einen Diffusionsprozeß erreichen sie während des Naßbeschichtungsvorganges die Grenzfläche und entfalten dort ihre stabilisierenden Wirkungen. Damit unterscheiden sich diese Spezies auch von den Korrosionsschutzpigmenten des Standes der Technik. Werden keine transparenten Schichten gewünscht, so können die Systeme (ohne Einbuße ihrer primären Korrosionsschutzwirkung) selbstverständlich mit zusätzlichen Pigmenten ausgestattet werden. Eine weitere (zusätzliche) Möglichkeit ist der Einbau von fluorierten Seitenketten (z.B. über entsprechend hydrolysierbare Silane), durch die solche Schichten gleichzeitig eine niedrige Oberflächenenergie bereitstellen.

Gegenstand der vorliegenden Erfindung ist demgemäß ein Verfahren zum Schutz eines metallischen Substrats vor Korrosion, die in der Bildung einer von dem Metall abgeleiteten Spezies X resultiert, bei dem man auf das Substrat eine Beschichtungszusammensetzung auf der Basis von durch Hydrolyse- und Kondensationsprozesse hergestellten (Hetero)polysiloxanen aufbringt und härtet und das dadurch gekennzeichnet ist, daß die Beschichtungszusammensetzung mindestens eine Spezies Z umfaßt, die mit dem Metall unter Bildung einer Spezies Y, die eine negativere Bildungenthalpie als die Spezies X aufweist, reagiert bzw. wechselwirkt.

Im folgenden wird die vorliegende Erfindung unter Berücksichtigung bevorzugter Ausführungsformen derselben näher erläutert.

Unter dem Begriff "Korrosion" soll im folgenden jede Veränderung des Metalls, die zu einer Oxidation (Überführung) in das entsprechende Metallkation unter Bildung eines Spezies X führt, verstanden werden. Derartige Spezies X sind in der Regel (gegebenenfalls hydratisierte) Metalloxide, -carbonate, -sulfite, -sulfate oder auch -sulfide (z.B. im Fall der Einwirkung von H₂S auf Ag).

Unter "metallischem Substrat" soll in der vorliegenden Beschreibung und den Ansprüchen jedes Substrat verstanden werden, das durchgehend aus Metall besteht oder zumindest auf seiner Oberfläche eine metallische Schicht aufweist.

Die Begriffe "Metall" und "metallisch" umfassen im vorliegenden Zusammenhang nicht nur reine Metalle, sondern auch Mischungen von Metallen und Metallegierungen, wobei es sich bei diesen Metallen bzw. Metallegierungen vorzugsweise um korrosionsanfällige handelt.

Demgemäß kann das erfindungsgemäße Verfahren mit besonderem Vorteil auf metallische Substrate angewendet werden, die mindestens ein Metall aus der Gruppe Eisen, Aluminium, Magnesium, Zink, Silber und Kupfer umfassen, obwohl der Anwendungsbereich der vorliegenden Erfindung nicht auf diese Metalle beschränkt ist. Unter den Metallegierungen, die von der vorliegenden Erfindung besonders profitieren können, wären insbesondere Stahl und Messing sowie Aluminium-haltige Legierungen zu nennen.

Die erfindungsgemäß eingesetzte Beschichtungszusammensetzung auf der Basis von durch Hydrolyse- und Kondensationsprozesse hergestellten (Hetero)polysiloxanen leitet sich vorzugsweise von mindestens einer hydrolysierbaren Silicium-Verbindung der allgemeinen Formel (I)

R₄₋ₓSiR'ₓ (I)

ab, worin die Reste R, die gleich oder verschieden (vorzugsweise gleich) sein können, hydrolytisch abspaltbare Reste darstellen, wobei Alkoxy (insbesondere mit 1 bis 6 Kohlenstoffatomen, wie Methoxy, Ethoxy, Propoxy und Butoxy), Halogen (insbesondere Cl und Br), Wasserstoff. Acyloxy (vorzugsweise mit 2 bis 6 Kohlenstoffatomen, wie beispielsweise Acetoxy) und -NR"₂ (worin die Reste R", die gleich oder verschieden sein können, vorzugsweise für Wasserstoff oder (C₁₋₄)-Alkyl-Reste stehen), bevorzugt und Methoxy oder Ethoxy besonders bevorzugt sind; R' für Alkyl, Alkenyl, Aryl, Alkylaryl, Arylalkyl, Arylalkenyl, Alkenylaryl (vorzugsweise mit jeweils 1 bis 12 und insbesondere 1 bis 8 Kohlenstoffatomen und cyclische Formen einschließend) steht, wobei diese Reste durch Sauerstoff-, Schwefel-, Stickstoffatome oder die Gruppe -NR" unterbrochen sein können und ein oder mehrere Substituenten aus der Gruppe der Halogene und der gegebenenfalls substituierten Amino-, Amid-, Carboxy-, Mercapto-, Isocyanato-, Hydroxy-, Alkoxy-, Alkoxycarbonyl-, Phosphorsäure-, Acryloxy-, Methacryloxy-, Alkenyl-, Epoxy- oder Vinylgruppen tragen können; und x den Wert 1, 2 oder 3 (vorzugsweise 1 oder 2 und insbesondere 1) aufweist.

Besonders bevorzugte Silicium-Ausgangsverbindungen sind solche der obigen allgemeinen Formel (I), in der R für Methoxy oder Ethoxy steht, x gleich 1 ist und R' einen Alkyl-Rest (vorzugsweise mit 2 bis 6 und besonders bevorzugt 2 bis 4 Kohlenstoffatomen) darstellt, der durch eine Gruppe substituiert ist, die eine Gruppierung umfaßt, die einer Polyadditions- (einschließlich Polymerisations-) und/oder Polykondensationsreaktion zugänglich ist. Besonders bevorzugt handelt es sich bei dieser einer Polyadditions- und/der Polykondensationsreaktion zugänglichen Gruppierung um eine Epoxygruppe.

Demgemäß ist R' in der obigen Formel (I) besonders bevorzugt ein ω-Glycidyloxy-C₂₋₆-alkyl-Rest, noch bevorzugter ein γ-Glycidyloxypropyl-Rest. Konkrete Beispiele für besonders bevorzugte Silicium-Verbindungen sind demnach γ-Glycidyloxypropyltrimethoxysilan und γ-Glycidyloxypropyltriethoxysilan.

Neben der bzw. den oben beschriebenen hydrolysierbaren Silicium-Verbindung(en) können die erfindungsgemäß einzusetzenden (Hetero)polysiloxane weiter von anderen (dem Fachmann bekannten) hydrolysierbaren Silicium-Verbindungen, beispielsweise solchen, in denen x in der obigen Formel (I) null ist (z.B. Tetraethoxysilan), sowie von anderen hydrolysierbaren Verbindungen, insbesondere solchen von Elementen aus der Gruppe Ti, Zr, Al, B, Sn und V und insbesondere von Aluminium, Titan und Zirkonium, abgeleitet sein, wobei es jedoch bevorzugt wird, daß derartige Verbindungen (auf monomerer Basis) nicht mehr als 50 Mol-% aller eingesetzten (monomeren) hydrolysierbaren Verbindungen ausmachen.

Weitere (fakultative und bevorzugte) Komponenten der erfindungsgemäß einzusetzenden Beschichtungszusammensetzung werden im folgenden beschrieben.

Um der Korrosionsschutzschicht eine noch weiter verbesserte Abriebbeständigkeit zu verleihen, kann die Beschichtungszusammensetzung nanoskalige Teilchen enthalten. Bei diesen nanoskaligen Teilchen (die gegebenenfalls auch oberflächen-modifiziert sein können) handelt es sich bevorzugt um solche aus der Gruppe der Oxide, Oxidhydrate und Carbide von Silicium, Aluminium und Bor sowie der Übergangsmetalle (insbesondere Ti und Zr). Diese nanoskaligen Teilchen weisen eine Teilchengröße im Bereich von 1 bis 100, vorzugsweise 2 bis 50 und besonders bevorzugt 5 bis 20 nm auf. Das nanoskalige Material kann bei der Herstellung der Beschichtungszusammensetzung in Form eines Pulvers eingesetzt werden, wird jedoch vorzugsweise in Form eines wäßrigen oder alkoholischen Sols verwendet. Besonders bevorzugte nanoskalige Teilchen zur Verwendung in der vorliegenden Erfindung sind solche von SiO₂, TiO₂, ZrO₂, AIOOH und Al₂O₃ und insbesondere von SiO₂ und Aluminiumoxid (insbesondere als Böhmit). Diese teilchenförmigen Materialien sind sowohl in Form von Pulvern als auch in Form von Solen im Handel erhältlich. Insbesondere wenn auf hochkratzfeste Eigenschaften Wert gelegt wird, können die nanoskaligen Teilchen in einer Menge von bis zu 50 Gew.-%, bezogen auf den Matrix-Feststoffgehalt, eingesetzt werden. Allgemein liegt der Gehalt an nanoskaligen Teilchen, wenn sie in die erfindungsgemäß zu verwendende Zusammensetzung einverleibt werden, im Bereich von 3 bis 50, insbesondere 5 bis 40 Gew.-%, bezogen auf den Matrix-Feststoffgehalt.

Wenn als hydrolysierbares Ausgangssilan mindestens eine Verbindung der obigen allgemeinen Formel (I) eingesetzt wird, in der R' über eine Gruppierung verfügt, die einer Polyadditions- und/oder Polykondensationsreaktion zugänglich ist, kann es vorteilhaft sein, der Beschichtungszusammensetzung einen organischen Netzwerkbildner zuzusetzen. Im Falle einer Epoxygruppe als der einer Polyadditions- und/oder Polykondensationsreaktion zugänglichen Gruppierung handelt es sich bei diesen organischen Netzwerkbildnern vorzugsweise um (aromatische) Polyole oder aliphatische bzw. aromatische Mono- bzw. Polyepoxide. Beispiele für aromatische Polyole sind Polyphenylenether, die an mindestens zwei der Phenylringe Hydroxygruppen tragen, sowie allgemein Verbindungen (bzw. Oligomere), in denen aromatische Ringe durch eine Einfachbindung, -O-, -CO-, -SO₂- usw. miteinander verbunden sind und die mindestens (und vorzugsweise) zwei Hydroxygruppen an aromatische Gruppen gebunden aufweisen. Besonders bevorzugte aromatische Polyole sind aromatische Diole. Unter diesen aromatischen Diolen sind besonders bevorzugt Verbindungen mit den allgemeinen Formeln (II) und (III): 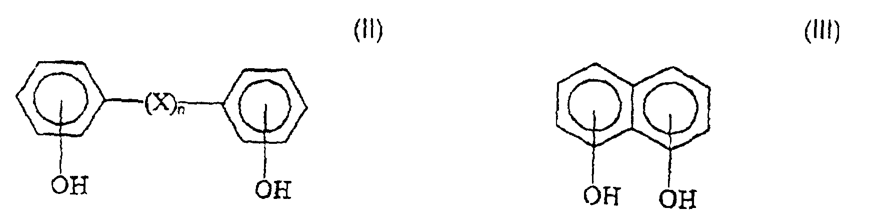 worin X für einen (C₁-C₈)-Alkylen- oder Alkyliden-Rest, einen (C₈-C₁₄)-Arylen-Rest, -O-, -S-, -CO- oder -SO₂- steht und n 0 oder 1 ist. Bevorzugte Bedeutungen für X in der Formel (II) sind (C₁-C₄)-Alkylen oder -Alkyliden, insbesondere -C(CH₃)₂-, und -SO₂-. In den Verbindungen der Formeln (II) und (III) können die aromatischen Ringe neben den OH-Gruppen noch bis zu 4 bzw. 3 weitere Substituenten, wie z.B. Halogen, Alkyl und Alkoxy, tragen.

Konkrete Beispiele für die Verbindungen der Formeln (II) und (III) sind Bisphenol A, Bisphenol S und 1,5-Dihydroxynaphthalin.

Besonders bevorzugt unter den aliphatischen bzw. aromatischen Mono- bzw. Polyepoxiden sind Verbindungen der allgemeinen Formeln (IV) bis (VIII): 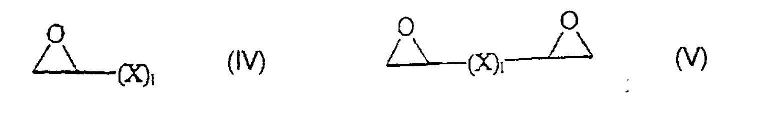 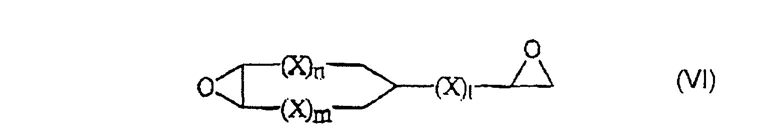 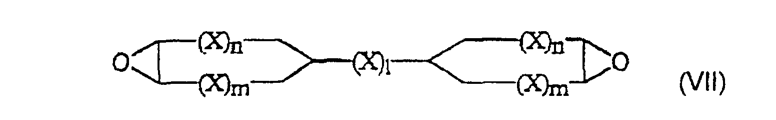 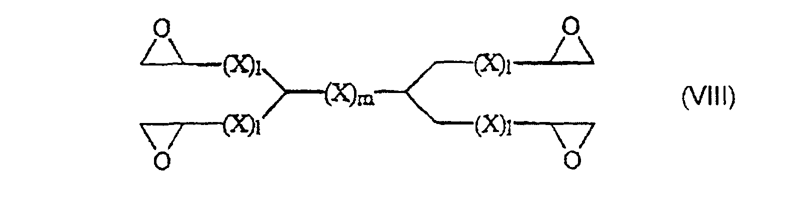 worin X für einen (C₁-C₂₀)-Alkylen- oder Alkyliden-Rest, einen (C₉-C₁₄)-Arylen-, einen Alkenyl-, einen Aryl-, einen Alkylaryl-, einen Arylalkyl-, einen Arylalkenyl- oder einen Alkenylaryl-Rest mit bis zu 20, vorzugsweise bis zu 12 Kohlenstoffatomen steht, wobei diese Reste durch Sauerstoff-, Schwefel-, Stickstoffatome oder die Gruppe -NR" (wie oben definiert) unterbrochen sein können und einen oder mehrere Substituenten aus der Gruppe der Halogene und der gegebenenfalls substituierten Amino-, Amid-, Carboxy-, Mercapto-, Isocyanato-, Hydroxy-, Phosphorsäure-, Acryloxy-, Methacryloxy-, Alkenyl-, Epoxy- oder Vinylgruppen tragen können.

Konkrete Beispiele für die Verbindungen der Formeln (IV) bis (VIII) sind 2,3-Epoxypropylphenylether, 4-Vinyl-1-cyclohexendiepoxid, 1,3-Butadiendiepoxid, 2,2-Dimethyl-1,3-propandiol-bis(2,3-epoxypropylether) und Bis{4-[bis(2,3-epoxypropyl)amino]phenyl}methan.

Gegebenenfalls (und bevorzugt) wird der Beschichtungszusammensetzung auch ein Starter für die organische Quervernetzung einverleibt (soweit diese auf Grund der eingesetzten Ausgangsverbindungen möglich ist). Bei diesem Starter kann es sich zum Beispiel im Falle der obigen Epoxygruppe-haltigen Verbindungen um eine Amin, ein Thiol, ein Säureanhydrid oder ein Isocyanat handeln. Bevorzugt handelt es sich dabei um ein Amin und insbesondere um einen Stickstoff-Heterocyclus.

Konkrete Beispiele für den Starter sind 1-Methylimidazol, Piperazin, Ethanthiol, Bernsteinsäureanhydrid und 4,4'-Methylen-bis(cyclohexylisocyanat). Als Starter kann jedoch auch ein (vorzugsweise hydrolysierbares) Silan mit Aminogruppe eingesetzt werden, beispielsweise γ-Aminopropyltri(m)ethoxysilan oder N-(2-Aminoethyl)-3-aminopropyltrimethoxysilan.

Wenn der erfindungsgemäß zu verwendenden Korrosionsschutz-Zusammensetzung zusätzlich hydrophobe, oleophobe und schmutzabweisende Eigenschaften verliehen werden sollen, ist es von Vorteil, die oben bereits genannten hydrolysierbaren Silane durch solche zu ergänzen, die über mindestens einen nicht-hydrolysierbaren Rest verfügen, der 5 bis 30 Fluoratome an Kohlenstoffatome gebunden aufweist, die durch mindestens zwei Atome von Si getrennt sind. Derartige Silane werden z.B. in der DE-A-41 18 184 beschrieben. Konkrete Beispiele hierfür sind die folgenden:

C₂F₅CH₂-CH₂-SiY₃

n-C₆F₁₃CH₂CH₂-SiY₃

n-C₈F₁₇CH₂CH₂-SiY₃

n-C₁₀F₂₁CH₂CH₂-SiY₃

(Y = OCH₃, OC₂H₅ oder Cl)

i-C₃F₇O-(CH₂)₃-SiCl₂(CH₃)

n-C₆F₁₃CH₂CH₂SiCl₂(CH₃)

n-C₆F₁₃CH₂CH₂SiCl(CH₃)₂

Bei der erfindungswesentlichen Spezies Z, die der vorliegenden Beschichtungszusammensetzung einverleibt sein muß, handelt es sich um eine Spezies, die mit dem vor Korrosion zu schützenden Metall (bzw. den vor Korrosion zu schützenden Metallen) unter Bildung einer Spezies Y reagiert oder zumindest wechselwirkt, die eine negativere Bildungsenthalpie aufweist als die Spezies X, die als Korrosionsprodukt des Metalls (der Metalle) des erfindungsgemäß zu behandelnden metallischen Substrates zu erwarten wäre. Mit anderen Worten gehen die jeweiligen Metalle mit der erfindungsgemäß eingesetzten Spezies Z eine thermodynamisch stabilere Verbindung ein als mit der (den) korrosionsverursachenden Spezies (z.B. Sauerstoff, Wasser, H₂S usw.).

Die Spezies Z kann erfindungsgemäß sowohl an die (Hetero)polysiloxane oder irgendeine andere Komponente der Beschichtungszusammensetzung gebunden sein (z.B. über eine kovalente Bindung) als auch lediglich molekulardispers in der Beschichtungszusammensetzung vorliegen und bei der Härtung derselben im anorganischen Skelett eingeschlossen werden. Selbstverständlich ist auch jede andere denkbare Inkorporierung der Spezies Z in der Beschichtungszusammensetzung möglich, solange ein direkter Kontakt der Spezies Z mit dem Metall (der Metalloberfläche) und eine Reaktion bzw. Wechselwirkung zwischen Metall und Spezies Z unter Bildung der Spezies Y möglich ist.

Bei der Spezies Y kann es sich zum Beispiel um eine Komplexverbindung oder ein schwer lösliches Salz der entsprechenden Metallkationen handeln.

Lediglich veranschaulichend kommen z.B. für Aluminium als Spezies Y Aluminiumsilicate (Si-O-Al-Bindungen), die in der Regel einen niedrigeren freien Enthalpiewert als Aluminiumoxide (Korrosionsprodukte = Spezies X) aufweisen, aber auch Phosphate und dergleichen in Frage. Phosphate eignen sich besonders auch für Magnesium- oder Eisen-Substrate (hier besonders bevorzugt in Kombination mit Zink-Verbindungen).

Unter den schwer löslichen Salzen wären beispielsweise zu erwähnen Silberiodid und -cyanid, Mullit (3Al₂O₃ · 2SiO₂), Aluminiumphosphat, Eisensulfid (FeS), Eisenphosphat (FePO₄) usw., Magnesiumphosphat, Magnesiumammoniumphosphat, Dolomit (CaMg(CO₃)₂), Magnesiumsilicat (MgSiO₃), Spinelle (MgAl₂O₄), Zinkphosphat (Zn₃(PO₄)₂), Zinksilicat (ZnSiO₃), Zinksulfid, Zinkarsenat (Zn₃(AsO₄)₂), Aluminium-Zinkoxid (ZnAl₂O₄) usw.

Ganz allgemein sind konkrete Beispiele für geeignete Spezies Z, die entweder als Komplexligand fungieren, mit Metallen unlösliche Verbindungen bilden oder mit Metallen eine andere - wie auch immer geartete - thermodynamisch stabile(re) Verbindung eingehen können, Fluoro, Chloro, Bromo und lodo, Hydroxo, Oxo, Peroxo, Nitrito-O, Tetrahydrofuran, Cyanato, Fulminato-O, Thiocyanato, Thio, Disulfido, Mercapto, Mercaptobenzothiazol, Trithion, Ammin, Amido, Imido, Ethylendiamin, Diethylentriamin, Triethylentetramin, Nitrosyl, Nitrito-N, Cyano-N, Nitril, Isocyanato, Isothiocyanato, Pyridin, α,α-Dipyridyl, Phenanthrolin, Trifluorophosphan, Phosphan, Phosphonato, Phosphato, Ammoniumphosphato, Ethylendiamintetraacetat, Acetylacetonat, Arsenat, Benzoat, Carbonyle, Cyanato-C, Isonitril und Fulminato-C sowie Magnesiumoxid, Zink und Zinkoxid.

Unter diesen Spezies Z sind besonders bevorzugt Phosphat oder Phosphat bildende Vorstufen und Komplexbildner wie Isocyanate, Amine, Benzoate sowie MgO, Zn und ZnO.

Selbstverständlich hängt die Wahl der Spezies Z immer vom konkret zu schützenden Metall und der entsprechenden Spezies X ab.

Die folgenden Tabellen 1 bis 4 (entnommen aus Ishan Barin: "Thermochemical Data of Pure Substances"; Knacke, Kubaschewski, Hesselmann: "Thermodynamical Properties of Inorganic Substances" und "Handbook of Chemistry and Physics") geben einen Überblick über die Bildungsenthalpien und Bildungsenergien sowie die Löslichkeit in heißem Wasser bestimmter von Al, Mg, Zn und Fe abgeleiteter Spezies X bzw. Y.

**Tabelle 1**

| **(T = 298 K)** | | | |
|---|---|---|---|
| **Verbindungsname** | **Summenformel** | **Bildungsenthalpie ΔH**_{**f**} **[kJ/Mol]** | **Bildungsenergie ΔG**_{**f**} **[kJ/Mol]** |
| Korund | Al₂O₃ | -1676 | -1582 |
| Aluminiumhydroxid (amorph) | Al(OH)₃ | -1276 | -1139 |
| Böhmit | AlOOH (B) | -985 | - |
| Diaspor | AlOOH (D) | -1002 | - |
| Aluminiumphosphat | AlPO₄ | -1733 | -1617 |
| Mullit | 3Al₂O₃ · 2SiO₂ | -6819 | -6443 |
| Andalusit | Al₂O₃ · SiO₂ | -2590 | -2443 |
| Sillimanit | Al₂O₃ · SiO₂ (S) | -2588 | -2441 |
| Kyanit | Al₂O₃ · SiO₂ (K) | -2594 | -2444 |
| Metakaolinit | Al₂O₃ · 2SiO₂ | -3341 | - |
| Kaolinit | Al₂O₃ · 2SiO₂ · 2H₂O | -4120 | -3799 |

**Tabelle 2**

| **(T = 298 K)** | | | | |
|---|---|---|---|---|
| **Verbindungsname** | **Summenformel** | **Bildungsenthalpie ΔH**_{**f**} **[kJ/Mol]** | **Bildungsenergie ΔG**_{**f**} **[kJ/Mol]** | **Löslichkeit [g/cm**^{**3**}**] in heißem Wasser** |
| Periclas | MgO | -601 | -569 | 0,0086 |
| Brucit | Mg(OH)₂ | -925 | -834 | 0,004 |
| basisches Chlorid | Mg(OH))Cl | -799 | -732 | - |
| Magnesiumchromat | MgO · Cr₂O₃ | -1778 | - | unlöslich |
| Magnesiumphosphat | 3MgO · P₂O₅ | -3781 | -3539 | unlöslich |
| Spinell | MgO · Al₂O₃ | -2299 | -2175 | unlöslich in H₂SO₄, HNO₃ und verd. HCI |
| Chrysotil | Mg₃Si₂O₅(OH)₄ | -4366 | -4038 | - |
| Clinoenstatit | MgSiO₃ | -1548 | -1462 | unlöslich |
| Anthophyllit | Mg₇Si₈O₂₂(OH)₂ | -12086 | -11367 | - |

**Tabelle 3**

| **(T = 298 K)** | | | | |
|---|---|---|---|---|
| **Verbindungsname** | **Summenformel** | **Bildungsenthalpie ΔH**_{**f**} **[kJ/Mol]** | **Bildungsenergie ΔG**_{**f**} **[kJ/Mol]** | **Löslichkeit [g/cm**^{**3**}**] in heißem Wasser** |
| Zinkoxid | ZnO | -351 | -321 | unlöslich |
| Zinkhydroxid | Zn(OH)₂ | -415 | - | schwach löslich |
| Zinkphosphat | Zn₃(PO₄)₂ | -2900 | -2664 | unlöslich |
| Willernit | 2ZnO · SiO₂ | -1645 | -1531 | unlöslich |
| Aluminium-Zinkoxid | ZnO · Al₂O₃ | -2072 | - | - |
| Zinksilicat | Zn₂SiO₄ | -1644 | - | - |

**Tabelle 4**

| **(T = 298 K)** | | | |
|---|---|---|---|
| **Verbindungsname** | **Summenformel** | **Bildungsenthalpie ΔH**_{**f**} **[kJ/Mol]** | **Bildungsenergie ΔG**_{**f**} **[kJ/Mol]** |
| Eisenoxid (Hematit) | Fe₂O₃ | -824 | -742 |
| Eisenoxid (Magnetit) | Fe₃O₄ | -1118 | -1015 |
| Eisensilicat | Fe₂SiO₄ | -1480 | |

Aus Tabelle 1 ist ersichtlich, daß mögliche Korrosionsprodukte des Aluminiums (die Oxide) positivere Bildungsenthalpien als beispielsweise Aluminiumphosphat oder die Aluminiumsilicate besitzen. Dies bedeutet, daß die möglichen Korrosionsprodukte X eine geringere thermodynamische Stabilität aufweisen als die erfindungsgemäß zu erzeugenden Spezies Y. Diese Eigenschaft wird prinzipiell auch bei der Herstellung von Korrosionsschutzüberzügen auf der Basis anodisch erzeugter Aluminiumoxidschichten durch elektrolytische Verfahren ausgenutzt (vgl. ΔH, von Korund mit ΔH_{f} der anderen Aluminiumoxide). Der Vorteil des erfindungsgemäßen Verfahrens liegt jedoch darin, daß in diesem Verfahren auf die elektrische Unterstützung des Prozesses verzichtet werden kann (es handelt sich um ein chemisch stromloses Verfahren). Weiter kann insbesondere bei Einverleibung von nanoskaligen Materialien in die Beschichtungszusammensetzung ein hoch effektiver Verschleißschutz erzielt werden.

Auch aus Tabelle 2 ergibt sich, daß mögliche Korrosionsprodukte X des Magnesiums (Oxide, basisches Chlorid) betragsgemäß kleinere Bildungsenthalpien als z.B. Phosphate, Spinelle und Silicate (Y) des Magnesiums zeigen. Hinzu kommt die geringere Löslichkeit der letztgenannten Verbindungen in heißem Wasser und Säuren.

Analoge Schlüsse lassen sich aus den Tabellen 3 und 4 im Falle von Zink- und Eisen-Verbindungen ziehen.

Die Herstellung der erfindungsgemäß einzusetzenden Zusammensetzung erfolgt in auf diesem Gebiet üblicher Weise. Vorzugsweise wird (werden) zunächst die hydrolysierbare(n) Silicium-Verbindungen der obigen allgemeinen Formel (I), in welcher x 1, 2 oder 3 ist, vorzugsweise unter Verwendung eines (vorzugsweise sauren Katalysators, besonders bevorzugt verdünnter Phosphorsäure, (bei Raumtemperatur) hydrolysiert, wobei im allgemeinen 0,25 bis 3 Mol und bevorzugt 0,5 bis 1 Mol H₂O pro Mol hydrolysierbarer Gruppe eingesetzt werden. Daran schließt sich beispielsweise die Zugabe der anderen Komponenten in beliebiger Reihenfolge an, wobei der Starter für die (bevorzugte) organische Quervernetzung - falls eingesetzt - vorzugsweise zum Abschluß der Synthese zugegeben wird, da er in einigen Fällen einen Einfluß auf die Topfzeiten der entsprechenden Beschichtungszusammensetzung ausübt.

Bei Verwendung von nanoskaligen Teilchen kann die Hydrolyse aber zum Beispiel auch in Gegenwart der nanoskaligen Teilchen erfolgen.

Werden (auch) Silicium-Verbindungen der allgemeinen Formel (I) eingesetzt. in welcher x 0 ist, so kann deren Hydrolyse zum Beispiel während der Hydrolyse der anderen Silane der allgemeinen Formel (I) erfolgen, indem man die besagten Silane gemeinsam unter den oben genannten Bedingungen hydrolysiert. Bevorzugt erfolgt sie jedoch getrennt von der Hydrolyse der anderen hydrolysierbaren Silane, wobei zwischen 0,25 und 3 Mol, besonders bevorzugt 0,5 bis 1 Mol H₂O pro Mol hydrolysierbare Gruppe eingesetzt werden und als Hydrolysekatalysator Mineralsäuren, bevorzugt HCI, Verwendung finden.

Zur Einstellung der rheologischen Eigenschaften der Beschichtungszusammensetzung können dieser gegebenenfalls inerte Lösungsmittel auf irgendeiner Stufe der Herstellung zugesetzt werden (vorzugsweise handelt es sich bei diesen Lösungsmitteln um bei Raumtemperatur flüssige Alkohole - die im übrigen auch bei der Hydrolyse der bevorzugt eingesetzten Silane entstehen - bzw. um bei Raumtemperatur flüssige Etheralkohole).

Weiter können in die erfindungsgemäß verwendete Beschichtungszusammensetzung die üblichen Additive einverleibt werden, wie zum Beispiel Färbemittel, Verlaufsmittel, UV-Stabilisatoren, Photoinitiatoren, Photosensibilisatoren (wenn eine photochemische Härtung der Zusammensetzung beabsichtigt ist) und thermische Polymerisationskatalysatoren (z.B. die bereits oben erwähnten Starter für die organische Quervernetzung).

Das Aufbringen der Beschichtungszusammensetzung auf metallische Substrate kann durch Standard-Beschichtungsverfahren, wie z.B. Tauchen, Streichen, Bürsten, Rakeln, Walzen, Sprühen, Schleudern, Siebdruck und Vorhang-Beschichten, erfolgen.

Gegebenenfalls nach vorheriger Antrocknung bei Raumtemperatur (zur teilweisen Entfernung des Lösungsmittels) wird dann eine Härtung durchgeführt. Vorzugsweise erfolgt die Härtung thermisch bei Temperaturen im Bereich von 50 bis 300°C, insbesondere 70 bis 220°C und besonders bevorzugt 90 bis 130°C.

Die Beschichtungszusammensetzung wird bevorzugt in Trocken-Schichtdicken von 1 bis 50 µm, insbesondere 2 bis 20 um und besonders bevorzugt 5 bis 10 um auf das metallische Substrat aufgebracht.

Die erfindungsgemäß aufgebrachten Beschichtungen zeichnen sich neben einer hohen Transparenz insbesondere durch eine sehr hohe Kratzfestigkeit (noch verstärkt durch die Verwendung von nanoskaligen Teilchen), schmutzabweisende Eigenschaften (bei zusätzlicher Verwendung von fluorierten Silanen) und ausgezeichnete korrosionsinhibierende Eigenschaften aus. Dabei ist besonders zu erwähnen, daß die zu beschichtende Metalloberfläche lediglich gereinigt (entfettet) werden muß. Haftvermittler, wie z.B. Chromat- oder Phosphatschichten, müssen nicht eingesetzt werden.

Spezielle Anwendungsgebiete und Anwendungsbeispiele für den Einsatz der vorliegenden Erfindung sind:
Bauwerke, z.B. Stütz- und Schalungsmaterial aus Stahl, Strebausbau, Grubenstempel, Tunnel- und Schachtausbaukonstruktionen, Isolierbauelemente, Verbundplatten aus zwei Profilblechen und einer isolierenden Metallage, Rolläden, Gerüstkonstruktionen, Dachstühle, Armaturen und Medienversorgungen, Stahlschutzplanken, Straßenbeleuchtung und -beschilderung, Scheren- und Rollgitter, Tore, Türen, Fenster und deren Rahmen und Verkleidungen, Tor- oder Türschwellen aus Stahl oder Aluminium, Feuerschutztüren, Tanks, Sammelbehälter, Fässer, Bottiche und ähnliche Behälter aus Eisen, Stahl oder Aluminium, Heizkessel, Heizkörper, Dampfkessel, Hallen mit und ohne Einbauten, Gebäude, Garagen, Gartenhäuser, Fassaden aus Stahlblech oder Aluminium, Profile für Fassaden, Fensterrahmen, Fassadenelemente, Dächer aus Zink;
Fahrzeuge, z.B. Karosserieteile von PKW, LKW und NKW aus Magnesium, Straßenfahrzeuge aus und mit Aluminium, elektrotechnische Erzeugnisse, Felgen, Räder aus Aluminium (auch verchromt) oder Magnesium, Motoren, Antriebselemente für Straßenfahrzeuge, insbesondere Wellen und Lagerschalen, Imprägnierung von porösen Druckgußbauteilen, Flugzeuge, Schiffsschrauben, Schiffe, Typenschilder;
Haushalts- und Bürogegenstände, z.B. Möbel aus Stahl, Aluminium, Neusilber oder Kupfer, Regale, sanitäre Anlagen, Kücheneinrichtungen, Beleuchtungselemente (Lampen oder Leuchten), Solaranlagen, Schlösser, Beschläge, Tür- und Fenstergriffe, Koch-, Brat- und Backgeschirre, Briefkästen und Kastenanlagen, Panzerschränke, Sicherheitskassetten, Sortier-, Ablage- und Karteikästen, Federschalen, Stempelhalter, Frontplatten, Blenden, Typenschilder, Skalen;
Gebrauchsgegenstände, z.B. Tabakdosen, Zigarettenetuis, Puderdosen, Lippenstifthüllen, Waffen, z.B. Messer und Pistolen, Griffe und Klingen für Messer oder Scheren und Scherenblätter, Werkzeuge, z.B. Schraubenschlüssel, Kneifzangen und Schraubenzieher, Schrauben, Nägel, Metallgewebe, Federn, Ketten, Eisen- oder Stahlwolle und -schwämme, Schnallen, Nieten, Schneidwaren, z.B. Rasierapparate, -messer und -klingen, Brillengestelle aus Magnesium, Besteck, Spaten, Schaufeln, Hacken, Äxte, Beile, Musikinstrumente, Uhrzeiger, Schmuck und Ringe, Pinzetten, Klammern, Haken, Ösen, Mahlkugeln, Schmutzkörbe und Abwassersiebe, Schlauch- und Rohrschellen, Sportgeräte, z.B. Schraubstollen und Torgestelle.

Beschichtungen zur Erhöhung der Korrosionsbeständigkeit eignen sich z.B. für Eisen- und Stahlerzeugnisse, insbesondere Profile, Bänder, Platten, Bleche, Coils, Drähte und Rohre aus Eisen, unlegiertem, nicht-rostendem oder anders legiertem Stahl, entweder blank, verzinkt oder anders plattiert, geschmiedetes Halbzeug aus unlegiertem, nicht-rostendem oder aus anderem legierten Stahl;
Aluminium, insbesondere Folien, dünne Bänder, Bleche, Platten, Druckguß, Halbzeug, Preß-, Stanz- oder Ziehteile;
metallische Überzüge, die durch Aufschmelzen, elektrolytische oder chemische Verfahren erzeugt wurden; und
Metalloberflächen, die durch Lackierung, Glasur oder anodische Oxidation veredelt wurden.

Beschichtungen zur Erhöhung der Verschleißfestigkeit eignen sich z.B. für Schmuck, Uhren sowie Bauteile davon und Ringe aus Gold und Platin.

Diffusionssperrschichten eignen sich z.B. für Angelgewichte aus Blei, Diffusionsbarrieren auf Edelstahl zur Vermeidung von Schwermetallkontamination, Wasserrohre, Nickel- oder Kobalt-haltige Werkzeuge oder Schmuck (anti-allergen).

Schichten zur Oberflächennivellierung/Verschleißminderung des Reibgutes eignen sich z.B. für Dichtungen, Dicht- oder Führungsringe.

Die folgenden Beispiele dienen der weiteren Erläuterung der vorliegenden Erfindung, ohne deren Umfang jedoch zu beschränken.

### Beispiel 1

### a) Herstellung des Beschichtungssols

236,35 g γ-Glycidyloxypropyltrimethoxysilan (im folgenden GPTMS) wurden in einem 1000 ml-Zweihalskolben vorgelegt und unter Rühren mit 54,0 g 0,1 m ortho-Phosphorsäure (H₃PO₄) versetzt. Das Reaktionsgemisch wurde über Nacht (14 Std.) bei Raumtemperatur gerührt. Nach anschließender Zugabe von 97,21 g SiO₂-Sol (IPA-ST, erhältlich von Nissan Chemical Industries, Ltd.; 30 Gew.-% in 2-Propanol, Teilchengröße: 10 nm) wurde weitere 10 Min. bei Raumtemperatur gerührt. Das Gemisch wurde in eine 2000 ml-Glasflasche überführt und darauf wurde eine Lösung von 91,31 g Bisphenol A (BPA) in 437,5 g Isopropoxyethanol (IPE) zum Hydrolyseprodukt gegeben und das Rühren weitere 10 Min. fortgesetzt. Anschließend wurden 2,05 g 1-Methylimidazol (Ml) und 8,97 g 3-Aminopropyltrimethoxysilan (APTS) unter Rühren zugetropft. Die Viskositäten der Beschichtungssole lagen zwischen 8 und 25 mPa · s.

### b) Entfetten der Metalle

Die Oberfläche von Aluminiumbauteilen (AlSi12) wurde mit einem tensidhaltigen alkalischen Reiniger (P3-Almeco 18® , Fa. Henkel, 3%-ige wäßrige Lösung) bei 50°C entfettet. Die Bauteile wurden 3 Min. lang in ein Bad des Reinigungsmittels getaucht und anschließend unter fließendem entionisiertem Wasser abgespült (Dauer: 1 Min.). Anschließend wurden die Teile im Umlufttrockenschrank (70°C) 10 Min. lang getrocknet.

### c) Aufbringen des Beschichtungssols

Die entfetteten Substrate (vgl. b)) wurden in das Beschichtungssol getaucht. Nach 1 Min. erfolgte die Entnahme und überschüssiger Lack wurde durch Schleudern von der Metalloberfläche entfernt. Danach wurden die Beschichtungen durch Lagerung in einem Umlufttrockenschrank (180°C) 30 Min. lang ausgehärtet. Die transparenten Schichten zeigten eine ausgezeichnete Haftung bei Schichtstärken zwischen 7 und 30 µm. Die beschichteten Proben wurden dem Salzsprühklima (DIN 50021, CASS) unterzogen. Nach 120-stündiger Belastung zeigten sich keine Flächenschäden; die Unterwanderung am Ritz betrug weniger als 1 mm.

### Beispiel 2

### a) Herstellung des Beschichtungssols

23,64 g GPTMS wurden in einem Kolben vorgelegt und eine Lösung von 7,8 mg Natriumbenzoat in 7,7 g Kieselsol (200S, Fa. Bayer, 30 Gew.-% in Wasser; Teilchengröße: 7 - 8 nm) wurde unter Rühren zugegeben. Die zunächst trübe zweiphasige Mischung wurde 5 Stunden bei Raumtemperatur gerührt, darauf wurde sie mit einer Mischung von 9,13 g BPA in 9,2 g Ethanol versetzt und weitere 18 Stunden gerührt. Anschließend wurden 0,41 g Ml zugesetzt und es wurde weitere 40 Min. gerührt. Das resultierende transparente Sol wies eine Topfzeit von mehr als 6 Tagen auf.

### b) Aufbringen des Beschichtungssols

Aluminiumbleche (Al 99,5) wurden wie unter 1 b) beschrieben entfettet, wobei die Proben allerdings zusätzlich direkt im Anschluß an die Einlagerung in das alkalische Bad 10 Sek. lang in eine 20%-ige Salpetersäure getaucht wurden. Die Beschichtung wurde per Tauchverfahren mit einer Ziehgeschwindigkeit von 5 mm/Sek. auf die Bleche aufgebracht. Die Aushärtung erfolgte bei 130°C über einen Zeitraum von 60 Min. Die Trockendicke der Schicht lag bei ca. 9 µm. Nach 240 Std. Belastung im Salzsprühnebelklima (CASS) zeigten sich keine Flächenschäden; die Unterwanderung am Ritz betrug weniger als 0,4 mm. Analog hergestellte Beschichtungen auf Stahl (ST 37) konnten 120 Std. im CASS belastet werden, ohne daß Korrosionserscheinungen auftraten.

### Beispiel 3

### a) Herstellung des Beschichtungssols

Zu 47,2 g GPTMS wurden 5,4 g 0,1 n HCl gegeben und 2 Std. bei Raumtemperatur gerührt. Anschließend wurden 18,26 g BPA in 40 g Ethanol und 20 g Butylglycol gelöst und dem Vorhydrolysat zugesetzt. Nach Zugabe von 22,7 g MgO wurde das Sol mit Glasperlen versetzt und in einer Kunststoffflasche geschüttelt (Red-Devil; Dispergieren des MgO). Abschließend wurden unter Rühren 3,58 g APTS zugegeben. Nach Zugabe des APTS beträgt die Topfzeit mindestens eine Stunde.

### b) Aufbringen des Beschichtungssols

Magnesiumbauteile (AZ91, AM50) wurden wie unter 1 b) oben beschrieben entfettet. Das wie oben hergestellte Sol wurde mit einer handelsüblichen Lackierpistole (SATA-Jet) auf die Bauteile aufgetragen. Die Aushärtung erfolgte im Umlufttrockenschrank (170°C) über einen Zeitraum von 30 Min. Einige der beschichteten Proben wurden anschließend so mit einem Stahlnagel durchschlagen, daß dieser zur Hälfte in den Bauteilen steckenblieb. Dies geschah, um innerhalb der Belastungen im Salzsprühnebeltest (CASS) Kontaktkorrosion zu simulieren. Nach 48 Std. Belastungsdauer konnten keine Korrosionsschäden auf der Metalloberfläche beobachtet werden. Ausgehend vom Stahlnagel war die Unterwanderung kleiner als 1 mm.

### Beispiel 4

### a) Herstellung des partikulären Sols

119,3 g Methyltriethoxysilan (MTEOS) wurden bei Raumtemperatur unter Rühren mit 37,3 g Tetraethoxysilan (TEOS) und 23,3 g SiO₂-Sol (Bayer-Kieselsol 300/30) versetzt. Durch Zugabe von 23,3 g bidestilliertem Wasser und langsames Zutropfen von 1,2 g konzentrierter Salzsäure unter starkem Rühren erfolgte die Hydrolyse der Silane. Während dieser Umsetzung wurde eine starke Wärmeentwicklung und ein Umschlagspunkt des klaren, farblosen Sols über milchig-weiß wieder ins Farblose beobachtet.

### b) Herstellung der Matrix

236,3 g GPTMS wurden durch Zugabe von 27 g (0,1 m) H₃PO₄ bei Raumtemperatur vorhydrolysiert.

### c) Herstellung des Beschichtungssols

Zu dem GPTMS-Vorhydrolysat wurden 50,06 g 2,2'-Bis(4-hydroxyphenyl)sulfon (Bisphenol S, im folgenden BPS), in 68,5 g Ethanol und 68,5 g Butylglycol gelöst, gegeben. Nach Zugabe des partikulären Sols (siehe a)) entstand ein transparentes farbloses Beschichtungssol, für dessen organische Quervernetzung 1,64 g Ml als Starter zugesetzt wurden.

### d) Aufbringen des Beschichtungssols

Das oben unter c) hergestellte Beschichtungssol wurde durch Standard-Beschichtungsverfahren (z.B. Schleuder- oder Tauchbeschichtung) auf Metalloberflächen (Aluminium, Zink, Magnesium, Silber; Entfettung analog 1 b)) aufgebracht. Die Aushärtung des Sols erfolgte durch thermische Behandlung bei 130°C (Aushärtezeit; 1 Std.). Es resultierten Schichtstärken zwischen 5 und 20 µm. Beschichtete Bauteile aus Zink wurden Salzsprühnebelversuchen (DIN 50021, SS) unterzogen. Nach einer Belastungsdauer von 48 Std. traten keine Korrosionsschäden auf. Die thermische Wechselbeständigkeit dieser Proben wurde zwischen -40°C und 100°C geprüft; nach 200 Zyklen traten keine Schäden in der Beschichtung auf. Die Zink-Substrate zeigten nach einer Auslagerungsdauer von 120 Std. im Feuchtklima (95°C, 95% r.F.) keine Schäden. Beschichtete Silberproben überstanden Auslagerungszeiten von 48 Std. in einer H₂S-Atmosphäre ohne Anlaufen.

### Beispiel 5

### a) Herstellung der Matrix

1524 g γ-Glycidyloxypropyltriethoxysilan (GPTES) wurden in einem 2000 ml- Rundkolben mit 94 g 0,01 m HCI versetzt und zunächst 4 Std. bei Raumtemperatur gerührt. Das zweiphasige Reaktionsgemisch wurde anschließend zum Rückfluß erhitzt und weitere 2,5 Std. bei ca. 100°C gerührt. Das resultierende einphasige Gemisch wurde auf Raumtemperatur abgekühlt, in eine 5 I-Glasflasche überführt und nacheinander mit 1000 g SiO₂-Sol (IPA-ST) und 2,5 g Tetrahexylammoniumhydroxid (THAH) versetzt.

### b) Herstellung des Beschichtungssols

Zu 14,76 g des oben unter a) hergestellten Sols wurden 3,24 g 2,2-Dimethyl-1,3-propandiol-bis(2,3-epoxypropylether) und 0,28 g Piperazin (als Starter) gegeben. Die resultierende Mischung wurde mit 10 g Ethanol und 10 g Isopropoxyethanol versetzt und anschließend 30 Min. bei Raumtemperatur gerührt.

### c) Aufbringen des Beschichtungssols

Aluminiumbleche (Al 99,5) wurden wie unter 1 b) oben beschrieben entfettet. Die Beschichtung wurde per Tauchverfahren mit einer Ziehgeschwindigkeit von 5 mm/Sek. auf die Bleche aufgebracht. Die Aushärtung erfolgte über einen Zeitraum von 2 Std. bei 130°C. Die Schichtdicken lagen bei ca. 7 µm. Nach 500 Std. UV-Belastung im Sun-Test zeigten die farblosen transparenten Schichten keine Absorptionsverluste im sichtbaren Wellenlängenbereich. Die Ritzhärte der Beschichtungen betrug 50 g (modifizierter Erichsen-Test). Nach 120-stündiger Belastung im Salzsprühnebelklima (CASS) zeigten sich keine Flächenschäden. Die Unterwanderung am Ritz betrug weniger als 1,0 mm.

## Patentansprüche

1. Verfahren zum Schutz eines metallischen Substrats vor Korrosion, die in der Bildung einer von dem Metall abgeleiteten Spezies X resultiert, bei dem man auf das Substrat eine Beschichtungszusammensetzung auf der Basis von durch Hydrolyse- und Kondensationsprozesse hergestellten (Hetero)polysiloxanen aufbringt und härtet, **dadurch gekennzeichnet, daß** die Beschichtungszusammensetzung mindestens eine Spezies Z umfaßt, die mit dem Metall unter Bildung einer Spezies Y, die eine negativere Bildungsenthalpie als die Spezies X aufweist, reagiert bzw. wechselwirkt.

2. Verfahren nach Anspruch 1, **dadurch gekennzeichnet, daß** das metallische Substrat mindestens ein Metall aus der Gruppe Eisen, Aluminium, Magnesium, Zink, Silber und Kupfer umfaßt.

3. Verfahren nach irgendeinem der Ansprüche 1 und 2, **dadurch gekennzeichnet, daß** das metallische Substrat eine Legierung, insbesondere Stahl, Messing oder eine Aluminium-Legierung, umfaßt.

4. Verfahren nach irgendeinem der Ansprüche 1 bis 3, **dadurch gekennzeichnet, daß** es sich bei der Spezies X um ein (gegebenenfalls hydratisiertes) Oxid oder ein Sulfid handelt.

5. Verfahren nach irgendeinem der Ansprüche 1 bis 4, **dadurch gekennzeichnet, daß** die (Hetero)polysiloxane von mindestens einem hydrolysierbaren Silan abgeleitet sind, das über mindestens einen über eine Si-C-Bindung an Silicium gebundenen Rest verfügt, der eine Gruppierung umfaßt, die einer Polyadditions- und/oder Polykondensationsreaktion zugänglich ist.

6. Verfahren nach Anspruch 5, **dadurch gekennzeichnet, daß** es sich bei der einer Polyadditions- und/oder Polykondensationsreaktion zugänglichen Gruppierung um eine Epoxygruppe handelt.

7. Verfahren nach irgendeinem der Ansprüche 5 und 6, **dadurch gekennzeichnet, daß** der besagte Rest ein ω-Glycidyloxy-C₂₋₆-alkyl-Rest, vorzugsweise ein γ-Glycidyloxypropyl-Rest, ist.

8. Verfahren nach irgendeinem der Ansprüche 1 bis 7, **dadurch gekennzeichnet, daß** die Beschichtungszusammensetzung außerdem nanoskalige Teilchen umfaßt, die aus solchen aus der Gruppe der Oxide, Oxidhydrate und Carbide von Si, Al, B und den Übergangsmetallen, insbesondere Zr und Ti, ausgewählt sind.

9. Verfahren nach Anspruch 8, **dadurch gekennzeichnet, daß** es sich bei den nanoskaligen Teilchen um solche von Oxiden von Si oder Al handelt.

10. Verfahren nach irgendeinem der Ansprüche 1 bis 9, **dadurch gekennzeichnet, daß** die Spezies Z ausgewählt ist aus Spezies, die mit den betreffenden Metallkationen Komplexe oder schwer lösliche Salze bilden können.

11. Verfahren nach irgendeinem der Ansprüche 1 bis 10, **dadurch gekennzeichnet, daß** die Spezies Z ausgewählt ist aus der Gruppe der Phosphate oder Phosphat-Vorstufen, Isocyanate, Amine und Benzoate sowie aus MgO, Zn und ZnO.

12. Verfahren nach irgendeinem der Ansprüche 1 bis 11, **dadurch gekennzeichnet, daß** die Beschichtungszusammensetzung in einer Trockendicke von 1 bis 50 µm, insbesondere 5 bis 10 µm, aufgebracht wird.

13. Verfahren nach irgendeinem der Ansprüche 1 bis 12, **dadurch gekennzeichnet, daß** die Härtung der Beschichtungszusammensetzung thermisch, vorzugsweise bei Temperaturen im Bereich von 50 bis 300°C, erfolgt.

14. Beschichtungszusammensetzung zum Schutz von metallischen Substraten vor Korrosion, die in der Bildung einer von dem Metall abgeleiteten Spezies X resultiert, **dadurch gekennzeichnet, daß** sie auf durch Hydrolyse- und Kondensationsprozesse hergestellten (Hetero)polysiloxanen basiert und mindestens eine Spezies Z umfaßt, die mit dem Metall unter Bildung einer Spezies Y, die eine negativere Bildungsenthalpie als die Spezies X aufweist, reagiert bzw. wechseiwirkt.

## Claims

1. Process for protecting a metallic substrate against corrosion resulting in the formation of a species X, derived from the metal, wherein a coating composition based on (hetero)polysiloxanes prepared by hydrolysis and condensation processes is applied to the substrate and cured, and which is **characterized in that** the coating composition comprises at least one species Z which reacts or interacts with the metal to form a species Y having a more negative formation enthalpy than the species X.

2. Process according to Claim 1, **characterized in that** the metallic substrate comprises at least one metal from the group consisting of iron, aluminium, magnesium, zinc, silver and copper.

3. Process according to either of Claims 1 and 2, **characterized in that** the metallic substrate comprises an alloy, especially steel, brass or an aluminium alloy.

4. Process according to any of Claims 1 to 3, **characterized in that** the species X comprises an (optionally hydrated) oxide or a sulphide.

5. Process according to any of Claims 1 to 4, **characterized in that** the (hetero)polysiloxanes derive from at least one hydrolysable silane having at least one radical attached via an Si-C bond to silicon and comprising a grouping amenable to a polyaddition and/or polycondensation reaction.

6. Process according to Claim 5, **characterized in that** the grouping amenable to a polyaddition and/or polycondensation reaction is an epoxy group.

7. Process according to either of Claims 5 and 6, **characterized in that** the said radical is an ω-glycidyloxy-C₂₋₆ alkyl radical, preferably a γ-glycidyloxypropyl radical.

8. Process according to any of Claims 1 to 7, **characterized in that** the coating composition further comprises nanoscale particles selected from those from the group consisting of the oxides, oxide hydrates and carbides of Si, Al, B and the transition metals, especially Zr and Ti.

9. Process according to Claim 8, **characterized in that** the nanoscale particles comprise those of oxides of Si or Al.

10. Process according to any of Claims 1 to 9, **characterized in that** the species Z is selected from species able to form complexes or low-solubility salts with the metal cations in question.

11. Process according to any of Claims 1 to 10, **characterized in that** the species Z is selected from the group consisting of phosphates and phosphate precursors, isocyanates, amines and benzoates and also MgO, Zn and ZnO.

12. Process according to any of Claims 1 to 11, **characterized in that** the coating composition is applied in a dry thickness of from 1 to 50 µm, in particular from 5 to 10 µm.

13. Process according to any of Claims 1 to 12, **characterized in that** the coating composition is cured thermally, preferably at temperatures in the range from 50 to 300°C.

14. Coating composition for protecting metallic substrates against corrosion resulting in the formation of a species X, derived from the metal, **characterized in that** the composition is based on (hetero)polysiloxanes prepared by hydrolysis and condensation processes and comprises at least one species Z which reacts or interacts with the metal to form a species Y having a more negative formation enthalpy than the species X.

## Revendications

1. Procédé de protection d'un substrat métallique contre une corrosion ayant pour résultat la formation d'une espèce X dérivée du métal, dans lequel on dépose sur le substrat une composition d'enduit à base de polysiloxanes ou d'hétéropolysiloxanes préparés par hydrolyse et condensation et l'on fait durcir cet enduit, **caractérisé en ce que** la composition d'enduit comprend au moins une espèce Z qui réagit ou interagit avec le métal en formant une espèce Y dont l'enthalpie de formation est plus négative que celle de l'espèce X.

2. Procédé conforme à la revendication 1, **caractérisé en ce que** le substrat métallique est constitué d'au moins un métal choisi parmi du fer, de l'aluminium, du magnésium, du zinc, de l'argent et du cuivre.

3. Procédé conforme à l'une des revendications 1 et 2, **caractérisé en ce que** le substrat métallique est constitué d'un alliage, en particulier d'un acier, d'un laiton ou d'un alliage d'aluminium.

4. Procédé conforme à l'une des revendications 1 à 3, **caractérisé en ce que** l'espèce X est un oxyde, éventuellement hydraté, ou un sulfure.

5. Procédé conforme à l'une des revendications 1 à 4, **caractérisé en ce que** les polysiloxanes ou hétéropolysiloxanes dérivent d'au moins un silane hydrolysable comportant au moins un reste, lié à un atome de silicium par une liaison Si-C, qui contient un groupe approprié pour une réaction de polyaddition et/ou de polycondensation.

6. Procédé conforme à la revendication 5, **caractérisé en ce que** le groupe approprié pour une réaction de polyaddition et/ou de polycondensation est un groupe époxy.

7. Procédé conforme à l'une des revendications 5 et 6, **caractérisé en ce que** ledit reste est un reste ω-glycidyloxy-(alkyle en C₂₋₆), et de préférence un reste γ-glycidyloxypropyle.

8. Procédé conforme à l'une des revendications 1 à 7, **caractérisé en ce que** la composition d'enduit contient en outre des nanoparticules d'un matériau choisi parmi les oxydes, oxydes hydratés et carbures de silicium, d'aluminium, de bore et des métaux de transition.

9. Procédé conforme à la revendication 8, **caractérisé en ce que** les nanoparticules sont des particules d'oxydes de silicium ou d'aluminium.

10. Procédé conforme à l'une des revendications 1 à 9, **caractérisé en ce que** l'espèce Z est choisie parmi celles qui peuvent former, avec des cations des métaux mentionnés, des sels peu solubles ou des complexes.

11. Procédé conforme à l'une des revendications 1 à 10, **caractérisé en ce que** l'espèce Z est choisie dans l'ensemble que constituent les phosphates et précurseurs de phosphates, les isocyanates, les amines et les benzoates, ainsi que l'oxyde de magnésium, le zinc et l'oxyde de zinc.

12. Procédé conforme à l'une des revendications 1 à 11, **caractérisé en ce qu'**on dépose la composition d'enduit en une couche dont l'épaisseur vaut, à sec, de 1 à 50 µm, en particulier de 5 à 10 µm.

13. Procédé conforme à l'une des revendications 1 à 12, **caractérisé en ce qu'**on fait durcir la composition d'enduit en la chauffant, de préférence à une température de 50 à 300 °C.

14. Composition d'enduit, destinée à protéger un substrat métallique contre une corrosion ayant pour résultat la formation d'une espèce X dérivée du métal, **caractérisée en ce qu'**elle est à base de polysiloxanes ou d'hétéropolysiloxanes préparés par hydrolyse et condensation et comprend au moins une espèce Z qui réagit ou interagit avec le métal en formant une espèce Y dont l'enthalpie de formation est plus négative que celle de l'espèce X.
